# FASCICULE DE BREVET EUROPEEN

(11) **EP 2 587 924 B1**
(45) Date de publication et mention de la délivrance du brevet: **02.09.2015**
(21) Numéro de dépôt: 11741629.7
(22) Date de dépôt: 01.07.2011
(51) Int. Cl.: A01N 65/08, A01P 15/00

(54) **UTILISATION D'UN EXTRAIT NATUREL DE MARC DE RAISIN POUR STIMULER LES DEFENSES NATURELLES DE PLANTES**
VERWENDUNG EINES NATÜRLICHEN EXTRAKTS AUS TREBER ZUR STIMULATION DER NATÜRLICHEN ABWEHRKRÄFTE VON PFLANZEN
USE OF A NATURAL GRAPE MARC EXTRACT IN ORDER TO STIMULATE THE NATURAL DEFENSES OF PLANTS

(30) Priorité: 02.07.2010 FR 1055397
(43) Date de publication de la demande: 08.05.2013
(73) Titulaire: Centre National de la Recherche Scientifique (CNRS), 75016 Paris (FR); Université Blaise Pascal - Clermont-Ferrand II, 63000 Clermont Ferrand (FR); Institut National De La Recherche Agronomique, 75007 Paris (FR)
(72) Inventeur: RICHARD, Claire, 63110 Beaumont (FR); TER HALLE, Alexandra, 63190 Lezoux (FR); GOUPIL, Pascale, 63170 Perignat-les-Sarlieve (FR); LEDOIGT, Gérard, 63540 Romagnat (FR); EYHERAGUIBEL, Boris, 63540 Romagnat (FR); THIERY, Denis, 33670 Sadirac (FR)
(74) Mandataire: Cabinet Plasseraud
(86) Numéro de dépôt international: PCT/FR2011/051549
(87) Numéro de publication internationale: WO 2012/001329

(56) Documents cités:
- WO-A2-03/086079
- KAVROULAKIS ET AL: "Local and systemic resistance against fungal pathogens of tomato plants elicited by a compost derived from agricultural residues", PHYSIOLOGICAL AND MOLECULAR PLANT PATHOLOGY, ACADEMIC PRESS LTD, GB, vol. 66, no. 5, 1 mai 2005 (2005-05-01), pages 163-174, XP005140763, ISSN: 0885-5765, DOI: DOI:10.1016/J.PMPP.2005.06.003
- SPYRIDON NTOUGIAS ET AL: "Suppression of soil-borne pathogens of tomato by composts derived from agro-industrial wastes abundant in Mediterranean regions", BIOLOGY AND FERTILITY OF SOILS ; COOPERATING JOURNAL OF INTERNATIONAL SOCIETY OF SOIL SCIENCE, SPRINGER, BERLIN, DE, vol. 44, no. 8, 4 juin 2008 (2008-06-04), pages 1081-1090, XP019627814, ISSN: 1432-0789

## Description

L'augmentation des rendements est au coeur des préoccupations des agriculteurs. Or, le rendement dépend grandement du bon développement de la plante et par conséquent de sa croissance, ainsi que de sa bonne santé.

La croissance des plantes est directement liée à l'absorption et à l'assimilation d'éléments minéraux ainsi qu'aux flux hormonaux régissant l'allongement et la différenciation des tissus végétaux. Par conséquent, les nutriments et hormones jouent un rôle essentiel dans la croissance des plantes. Du fait de leur incapacité à se déplacer, les plantes ont mis en place des mécanismes actifs et activables leur permettant d'utiliser au mieux les ressources présentes pour favoriser leur croissance. Afin d'augmenter cette croissance, des engrais sont utilisés. Il est également possible d'utiliser d'autres molécules, souvent glucidiques, extraites d'algues pour favoriser la croissance.

L'intégrité des plantes est également une condition indispensable pour assurer le rendement. Or, les plantes sont perpétuellement soumises à l'agression par des microorganismes pathogènes. La mise en place des défenses est donc un élément déterminant dans l'efficacité de la résistance.

Conventionnellement, il est utilisé de façon massive des produits phytopharmaceutiques potentiellement toxiques pour lutter contre l'attaque des pathogènes.

Les produits issus de l'industrie agro-pharmaceutiques (fongicide, insecticides) commercialisés par les firmes d'Agrochimie présentent un impact important pour l'environnement avec de potentielles toxicités pour l'homme.

L'induction artificielle des mécanismes de défense des plantes vis-à-vis des parasites est au centre de nombreuses recherches. La première voie de recherche a consisté à trouver des molécules mimant l'action de l'acide salicylique capable d'induire à lui seul une immunité mais insuffisamment toléré par certaines plantes. Un analogue chimique de l'acide salicylique, l'INA (ou acide 2,6-dichloroisonicotinique) ou d'autres éliciteurs de synthèse ont été mis au point : le benzothiadiazole (BTH commercialisé par la société SYNGENTA sous la marque BION®) et l'acide β-aminobutyrique (BABA®-Sigma Aldrich) mieux tolérés par les plantes de cultures.

La deuxième voie a consisté à rechercher des molécules naturelles (oligosaccharides, protéines enzymatiques, polypeptides) capables d'induire à elles seules les mécanismes de défense des plantes.

Des extraits fongiques issus de *Fusarium* (WO/2002/24869) et de *Trichoderma* (WO/2006/129998) ont montré des propriétés de stimulateur de défenses naturelles des plantes.

Des extraits de microorganismes issus *d'Erwinia* (WO/1998/37752, WO/1999/07206), de *Xanthomonas* (WO/2000/20616), *d'Agrobacterium* (WO/2000/28056), de *Cladosporium* (WO/2002/02787), de bactéries Gram+ (WO/1999/11133), de *Pseudomonas* (WO/1999/07207, WO/2003/068912) présentent la capacité d'induire les défenses naturelles des plantes (Varnier 2009). Des extraits d'insectes, de crustacés contenant des β-1,3-glucans (chitosan) ont montré des propriétés de stimulateur de défenses naturelles des plantes (Klarzynski 2000). La formulation ELEXA® (SAFE SCIENCE), dont le principe actif est le chitosane, est commercialisée comme éliciteur (Sharathchandra 2004).

Des extraits de levure présentent des propriétés de stimulateur de défenses naturelles des plantes (A1/2009/0010905)

Des extraits d'algues brunes contenant un oligosaccharide nommé laminarine induisent les réactions de défense des plantes (Aziz 2003, EP 1338200 et WO/2005/082150). La société GOEMAR commercialise les formulations « Iodus® 2 céréales » et « Iodus 2 Cultures spécialisées » dont le principe actif est la laminarine.

De nombreux extraits de plantes présentent des propriétés de stimulateur de défenses. Des extraits de graines de fenugrec (*Trigonella foenum greacum*) permettent d'activer les réactions de défense (WO02102162 et WO0410786). La formulation STIFENIA (SOFT) est commercialisée comme éliciteur naturel.

Des extraits aqueux de feuilles de neem (*Azadirachta indiça Juss*) contenant des tetranortriterpenoïdes (Paul 2002), des extraits éthanoliques de feuilles de renouée (*Reynoutria sachalinensis*) (Daayf 1997 ; Randoux 2006), des extraits de feuilles de bougainvilliers (Narwal 2000), de rhubarbe et d'épinard (Doubrava 1988) ont montré un effet éliciteur des réactions de défenses de la plante. La formulation MILSANA (SCHAETTE) contenant des extraits de Renouée est commercialisée comme éliciteur naturel. WO/2003/086079 décrit l'utilisation d'un extrait éthanolique de feuilles de vigne.

Des extraits de racine de rhubarbe (*Rheum palmatum*) et d'écorces de bourdaine (*Frangula alnus*) présentent un potentiel d'élicitation des mécanismes de défense de la vigne (Godard 2009).

D'autres formulations à base d'extrait de plantes sont en attente d'une autorisation de vente en tant qu'éliciteurs : Pireco (mélange de 11 extraits de plantes dont soja et d'algues marines) de la société TEAM GREEN ; Echo Protect (mélange d'extraits naturels de plantes dont ortie, ail). Kavroulakis et al. in Physiological and molecular plant pathology, academic press ltd, GB, vol.66 no.5, pp163-174 et Spyridon Ntougias et al. in Biology and fertility of soils; cooperating journal of international society of soil science, Springer, Berlin, vol.44, no.8, pp.1081-1090, ont travaillé sur l'utilisation comme éliciteurs de composts, c'est-à-dire de déchets végétaux biodégradés.

L'efficacité de ces formulations est souvent partielle, spécifique à certaines variétés de plantes, ou au stade de développement. Elles doivent être associées le plus souvent à des traitements chimiques. De plus, certains composés ne provoquent pas une résistance plusieurs fois de suite (extraits de plantes de fénugrec) ; une seule pulvérisation est possible. Leur action préventive et/ou curative peut être limitée dans le temps.

Il existe donc un besoin en une composition respectueuse de l'environnement et respectueuse des plantes auxquelles elle est destinée, qui stimule leur système de défense contre les pathogènes. Les présents inventeurs ont trouvé qu'un extrait naturel de marc de raisin présentait une telle activité. L'extrait proposé a donc la capacité de stimuler les mécanismes de défenses de plantes traitées. Ainsi, l'invention porte sur l'utilisation d'un extrait de marc de raisin pour stimuler les défenses naturelles de plantes. Le marc de raisin est constitué de la partie solide résultant du pressage des grains de raisin, c'est-à-dire des pellicules, pépins et éventuellement rafle. Le marc de raisin résulte donc de la transformation physique des grains de raisin. L'extrait de marc de raisin n'a pas subi de compostage.

L'extrait de marc de raisin dont l'utilisation est proposée permet d'induire l'expression des gènes de défense, c'est-à-dire de stimuler les défenses naturelles des plantes. De ce fait, il présente des propriétés d'élicitation.

Selon un mode de réalisation, l'extrait de marc de raisin, dont l'utilisation fait l'objet de la présente invention, comprend des composés naturels synthétisés par le raisin lui-même dont la culture est largement répandue et obtenus par un procédé traditionnel (non industriel). Ces composés ont donc beaucoup plus de chance d'être bien tolérés et de présenter des effets non toxiques. Ces composés naturels peuvent enfin être utilisés en agriculture biologique.

Ces composés naturels sont notamment des polyphénols et des anthocyanes. L'extrait utilisé selon l'invention peut contenir plus de 70% en poids par rapport à son poids sec de polyphénols. L'extrait peut également comprendre plus de 8% en poids d'anthocyanes par rapport au poids sec de l'extrait.

L'extrait de marc de raisin utilisé selon l'invention peut être préparé à partir de marc rouge auquel on ajoute de l'eau et on fait subir une centrifugation, le produit de la centrifugation est ensuite soumis à une extraction dans un mélange eau-éthanol comprenant moins de 30% v/v d'éthanol, puis est concentré sous vide et atomisé sans support de séchage, de façon à obtenir une poudre. Le procédé est conduit en présence de SO₂, sans ajout d'aucun additif. Le sulfite ajouté dans l'eau de diffusion, à hauteur d'environ 1g/l a pour rôle de solubiliser les anthocyanes et limiter leur oxydation.

Les composés naturels présents dans l'extrait de marc de raisin sont des composés faciles à extraire, peu couteux, hydrosolubles donc faciles d'emploi (dilution aisée. Ils peuvent améliorer les propriétés des formulants accompagnant les matières actives de par leur rôle photoprotecteur.

L'utilisation selon l'invention est tout à fait appropriée pour les plantes choisies dans le groupe comprenant les plantes agronomiquement utiles et les plantes ornementales.

Les plantes agronomomiquement utiles sont choisies dans le groupe des Angiospermes comprenant les Apiacées, les Astéracées, les Brassicacées, les Chénopodiacées, les Convolvulacées, les Cucurbitacées, les Fabacées, les Liliacées, les Polygonacées, les Rosacées, les Solanacées, les Poacées, les Vitacées.

L'invention porte également sur un procédé pour stimuler les défenses naturelles de plantes, qui comprend l'application d'une composition comprenant un extrait de marc de raisin sur lesdites plantes.

La composition mise en oeuvre dans le procédé selon l'invention comprend, comme produit actif, un extrait hydroalcoolique de marc de raisin. L'extrait de marc de raisin comprend plus de 45%, de préférence plus de 70% en poids de polyphénols par rapport au poids sec de l'extrait.

L'extrait comprend plus de 0,5%, de préférence plus de 8% en poids d'anthocyanes par rapport au poids sec de l'extrait. L'extrait de marc de raisin est avantageusement obtenu selon le procédé décrit précédemment.

La composition mise en oeuvre dans le procédé selon l'invention peut se présenter sous forme de poudre ou sous forme liquide.

Lorsque la composition se présente sous la forme de poudre, elle est dépourvue de tout autre agent actif.

Elle peut également être dépourvue de tout adjuvant non naturel.

Selon un mode de réalisation particulier du procédé selon l'invention, la composition est une composition aqueuse qui est appliquée par pulvérisation foliaire ou par infiltration.

La concentration en extrait de marc de raisin dans la composition mise en oeuvre dans le procédé selon l'invention est comprise entre 0,10 g/L et 10g/L, de préférence entre 0,3 g/L et 2,5 g/L, plus préférentiellement encore entre 0,5 g/L et 1,25 g/L, pour une application par pulvérisation en vue de favoriser les défenses naturelles des plantes. Une seule application avant l'attaque des agents pathogènes peut suffire. Cependant, il peut s'avérer parfois nécessaire de faire au moins une nouvelle application plusieurs jours ou plusieurs semaines après la première.

La composition est appliquée à raison de 0,1 à 2,0 kg/ha, de préférence de 0,3 à 1,5 kg/ha de cultures à traiter pour favoriser les défenses naturelles.

Les doses d'application et les modalités d'application dépendent bien entendu de l'espèce de plantes à traiter, et de son stade de développement.

Selon un mode de réalisation particulier, l'infiltration de l'extrait de marc de raisin est faite avec une concentration de moins de 0,30% (p/v), de préférence de 0,05 à 0,30% (p/v).

Le procédé selon l'invention peut être mis en oeuvre sur des plantes agronomiquement utiles et les plantes ornementales. De telles plantes sont celles mentionnées ci-dessus en lien avec l'utilisation.

L'infiltration d'un extrait de marc de raisin à une concentration de 0,25% sur les feuilles de tabac, induit une réponse d'hypersensibilité (locale) accompagnée d'une réponse de résistance systémique (SAR : Systemic Acquired Résistance), traduisant l'effet éliciteur de l'extrait, effet caractéristique de l'induction d'une immunité vis-à-vis de pathogènes. Cet effet éliciteur a été démontré au niveau moléculaire par l'analyse de l'expression de gènes marqueurs de la réponse SAR (*pr1* et *pr2*).

L'effet éliciteur d'un extrait de marc de raisin a également été démontré pour d'autres plantes Dicotélydone (tomates) et pour des plantes Monocotylédone (maïs).

L'utilisation de cet extrait permettra la diminution de la quantité de pesticides utilisés pour protéger les plantes des agents pathogènes. En culture biologique, l'utilisation de cet extrait permettra une diminution des pesticides.

L'invention va être décrite de façon plus détaillée ci-dessous à l'aide des exemples suivants qui sont donnés à titre d'illustration uniquement.

Les expériences ont été conduites sur les transcrits isolés à partir de plantes traitées par l'extrait de marc de raisin, de plantes traitées par l'acide salicylique (SA) (témoin positif, le SA est un éliciteur connu dans la réponse SAR) et de plantes pulvérisées sans éliciteur (témoin eau négatif). L'expression des gènes PR est analysée par PCR semi-quantitative en temps réel permettant l'amplification des transcrits d'intérêt. Les résultats démontrent une accumulation, des transcrits chez les plantes traitées avec les extraits, ce qui suggère une réponse de type éliciteur de nos extraits végétaux.

### EXEMPLES

Dans les exemples suivants, on utilise comme extrait de marc de raisin, le produit commercialisé par la société GRAP'SUD sous la marque exGrape® Anthocyanins. Ce produit présente les caractéristiques suivantes :
- poudre légèrement granulée rouge foncé
- polyphénols totaux :
   (en équivalent catéchine) DO 280 nm : ≥ 70%
   (en équivalent acide gallique) FOLIN CIOCALTEU : ≥ 60%
- procyanidines :
   (en équivalent catéchine) Méthode de la vanilline : ≥ 5%
- anthocyanes :
   Décoloration au disulfite : ≥ 8%

Ce produit est appelé dans les exemples "EXTRAIT".

On utilise également un potentialisateur acide bétaaminobutyrique, désigné par BABA dans les exemples.

### Exemple 1 - Elicitation sur feuilles de tabac

Sur des plants de tabac, au stade 10-12 feuilles (4-5 semaines), on infiltre sur les feuilles de l'EXTRAIT à 0,25% (p/v).

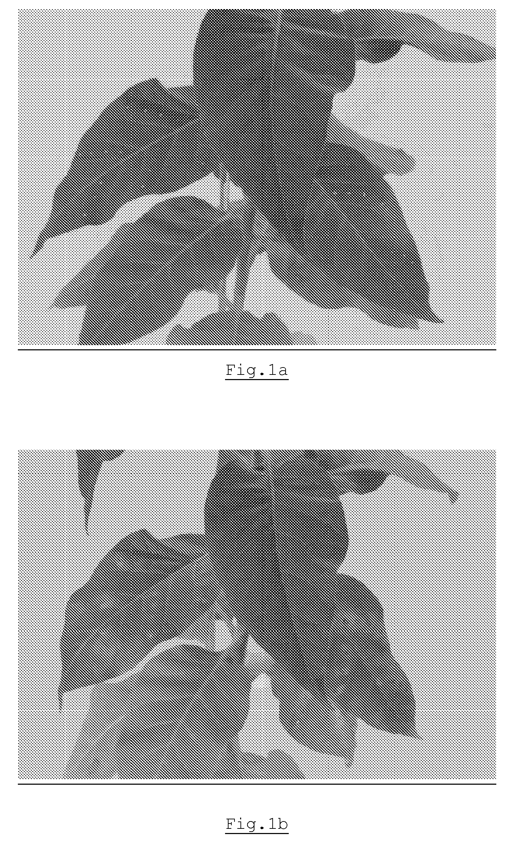

Une photographie des feuilles est prise juste après l'infiltration (figure 1a), puis 4 jours après l'infiltration (figure 1b). Quatre jours après l'infiltration, on observe les réponses d'hypersensibilité sur les feuilles qui ont été piquées.

On réalise un témoin acide salicylique (2mM) et on analyse la réponse SAR par PCR en temps réel.

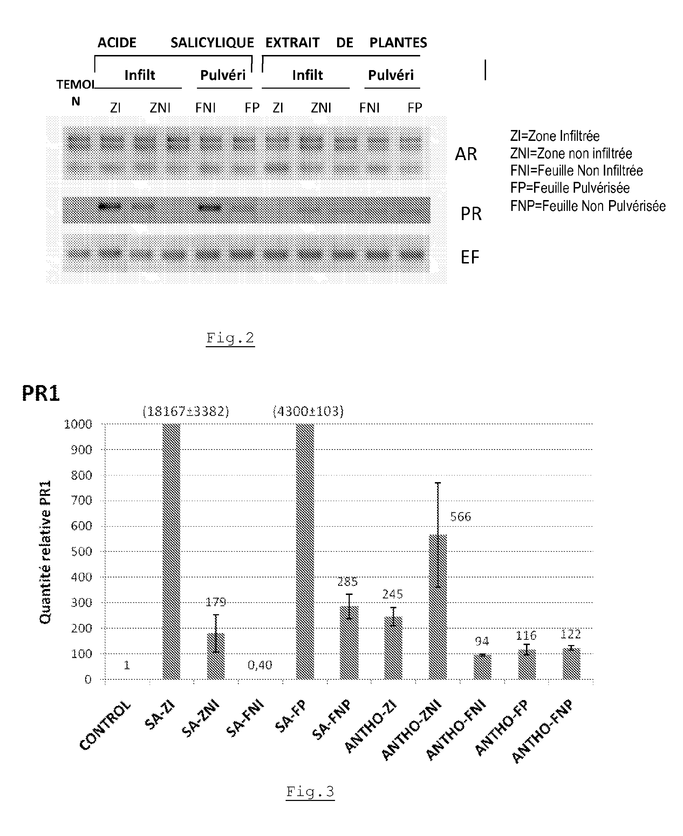

On obtient les résultats présentés sur les figures 2, 3 et 4.

Ces résultats démontrent une accumulation de transcrits chez les plants traités avec les extraits, dans les feuilles infiltrées ou pulvérisées et les feuilles non pulvérisées ou non infiltrées du même plant traité, ce qui suggère une réponse de type éliciteur de l'EXTRAIT.

Cet effet éliciteur a été démontré au niveau moléculaire par l'analyse de l'expression de gènes marqueurs de la réponse SAR (*pr1* et *pr2*).

L'analyse moléculaire a consisté à extraire les ARN totaux à partir de feuilles de tabac traitées en utilisant le kit d'extraction Tri-reagent (Euromedex). L'intégrité des ARN extraits est vérifiée par électrophorèse en gel d'agarose. La reverse transcriptase (RT) Euroscript (Eurogentec) est utilisée pour la synthèse des ADN complémentaires. Des amorces (oligonucléotides de 20 à 24 mers) spécifiques des gènes *pr1* et *pr2* ont permis l'amplification des ADNc correspondants par Polymérase Chain Reaction (PCR). L'amplification est suivie en temps réel (PCR en temps réel) basée sur la fluorescence émise par les produits d'amplification en présence de SYBR Green. Les fragments de RT-PCR spécifiques de *pr1* et *pr2* sont quantifiés en utilisant le logiciel iQv3 (BIO-RAD). L'abondance des transcrits *pr1* et *pr2* est normalisée (Quantité Relative) à ceux d'un gène d'expression constitutive, codant l'actine ou le facteur d'élongation alpha.

### Exemple 2

Les mêmes essais sont reproduits avec différentes concentrations en EXTRAIT : 2,5 g/L, 1,25 g/L, 0,625 g/L, 0,312 g/L et 0,156 g/L et différentes quantités pulvérisées par feuille et par plant. Ceci afin de déterminer la quantité finale permettant l'élicitation.

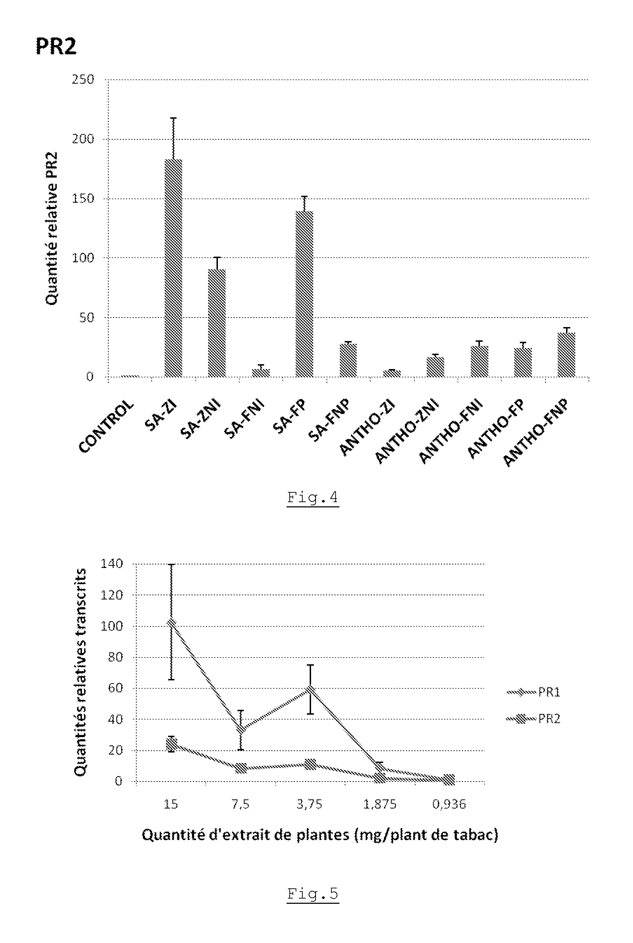

Les quantités mises en oeuvre sont présentées dans le tableau suivant et les résultats sont donnés sur la figure 5.

| **Dilution à partir de la solution mère d'EXTRAIT à 1%** | **X4** | **X8** | **X16** | **X32** | **X64** |
|---|---|---|---|---|---|
| **Concentration en EXTRAIT** | 2,5g/L | 1,25g/L | 0,625g/L | 0,312g/L | 0,156g/L |
| **Quantité pulvérisée/feuille** | 5mg | 2,5mg | 1,25mg | 0,625mg | 0,312mg |
| **Quantité pulvérisée/plant** | 15mg | 7,5mg | 3,75mg | 1,875mg | 0,936mg |

### Exemple 3

Différents essais d'infiltration de feuille de tabac ont été conduits avec 50µL de solution mentionnée ci-dessous:
Essai **1:** EXTRAIT à 0,25% (p/v)
Essai **2:** EXTRAIT à 0,125% (p/v)
Essai **3:** EXTRAIT à 0,0625% (p/v)
Essai **4:** EXTRAIT à 0,03125% (p/v)
Essai **5:** EXTRAIT à 0,0156% (p/v)
Essai **6:** BABA 10 mM
Essai **7** (témoin positif): acide salicylique 2mM
Essai **8** (témoin négatif): eau

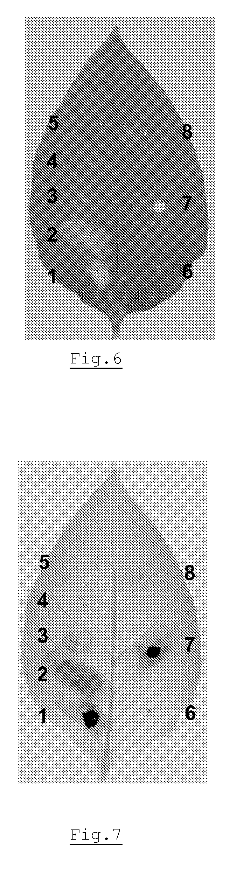

Huit jours après l'infiltration, les symptômes macroscopiques ont été observés sous lumière blanche et sous lumière UV [longueur d'onde à 312nm]. Les photographies correspondantes sont données en figures 6 et 7. Sur les figures, les chiffres correspondent au spot d'infiltration de l'essai portant un chiffre identique.

On voit sur ces photographies que l'extrait de marc de raisin induit une chlorose (zone claire dépourvue de chlorophylle) des tissus infiltrés (1 et 2 sur la figure 6) avec l'apparition de nécrose (zone brune desséchée) lorsque l'extrait est utilisé à forte concentration (1 sur la figure 6).

Le BABA (10mM) (6 sur la figure 6) de part son effet potentialisateur ainsi que l'eau (8 sur la figure 6) n'induisent aucune chlorose, ni nécrose au niveau des sites infiltrés. L'acide salicylique (2mM) (7 sur la figure 6) provoque la nécrose des tissus foliaires infiltrés.

L'extrait de marc de raisin infiltré aux concentrations 0.25% (1), 0.125% (2), 0.0625% (3) dans les feuilles de tabac induit une accumulation locale de composés fluorescents (1, 2 et 3 sur la figure 7) caractéristique de la LAR « Local Acquired Résistance » intervenant dans les réactions de défenses des végétaux.

### Exemple 4

Sur les feuilles infiltrées de l'exemple 3, on a réalisé un test au bleu d'EVANS. Le bleu d'Evans est un colorant vital qui pénètre aisément dans les cellules lorsque la membrane plasmique de celles-ci est endommagée et perméable. Il témoigne donc de la perte de l'intégrité cellulaire lorsqu'il y a mort cellulaire dans la réponse d'hypersensibilité.

Des rondelles (diamètre de 1 cm) de feuilles découpées à l'emporte pièce autour du point d'infiltration sont incubées dans une solution d'Evans (0.25%) à température ambiante et sous agitation modérée pendant 30 minutes pour une bonne pénétration du colorant dans les cellules. Les rondelles de feuilles sont soigneusement lavées à l'eau distillée puis broyées en présence de 1 mL de SDS 0.1% jusqu'à homogénéisation complète. L'homogénat est centrifugé pendant 20 minutes à 20000xg et le surnageant est dilué 8 fois avec de l'eau distillée. La densité optique est mesurée à 600nm et ramené à la masse de matière fraîche.

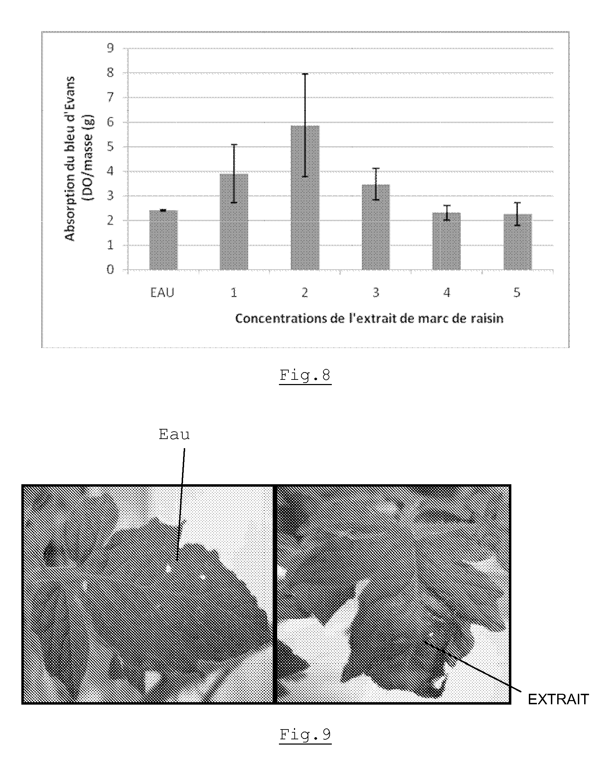

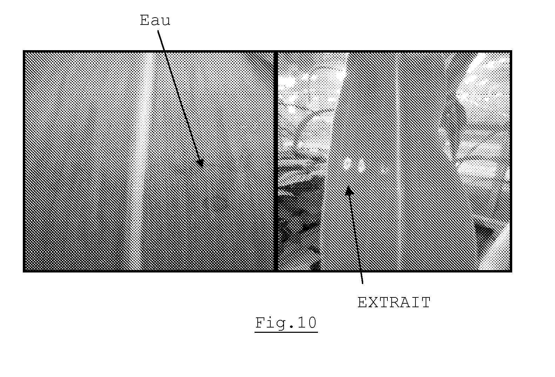

Les résultats sont présentés sur le graphique de la figure 8.

Les tissus foliaires infiltrés par le marc de raisin des essais 1, 2 et 3 présentent une absorption du bleu d'Evans supérieure à celle du témoin eau (essai 8) suggérant l'initiation de la mort cellulaire.

Cette réaction est caractéristique de la réponse hypersensible intervenant dans les réactions de défense des végétaux.

### Exemple 5

Des feuilles de tomate et des feuilles de maïs ont été infiltrées avec 50µL d'eau (témoin négatif) d'une part et 50µL d'EXTRAIT à 0,25% (p/v) d'autre part.

4 jours après infiltration des photographies à la lumière blanche ont été prises. Ces photographies sont données en tant que figure 8 pour la tomate et figure 9 pour le maïs.

Sur ces figures, on voit que l'extrait de marc de raisin infiltré à 0.25% (50µL) induit une réponse hypersensible (nécrose) chez la tomate (plante Dicotylédone) et le maïs (plante Monocotylédone).

### Références

Aziz et al. (2003) Laminarin elicits defense responses in grapevine and induces protection against Botrytis cinerea and Plasmopara viticola. MPMI, 16(12):1118-1128.
Daayf, F., Schmitt, A., Belanger, R.R., 1997. Evidence of phytoalexins in cucumber leaves infected with powdery mildew following treatment with leaf extracts of Reynoutria sachalinenesis. Plant Physiol 113, 719-727.
Doubrava, N.S., Dean, R.A., Kuc, J., 1988. Induction of systemic résistance to anthracnose caused by Colletotrichum lagenarium in cucumber by oxalate and extracts from spinach and rhubarb leaves. Physiol. Mol. Plant Pathol 33, 69-79.
Klarzynski et al. (2000). Linear b-1,3-glucans are elicitors of defense responses in tobacco. Plant physiol. 124:1027-1037.
Godard et al. (2009). Induction of defence mechanisms in gravepine leaves by emodin- and anthroquinone-rich plant extracts and their conferred résistance to downy mildew. Plant physiology and biochemistry, 47, 827-837.
Narwal et al. (2000) A systemic résistance inducing antiviral protein with N-glycosidase activity from Bougainvillea xbuttiana leaves. Indian J. Exp. Biol. 39, 600-603.
Paul et Sharma (2002) Azadirachta indica leaf extract induces résistance in barley against leaf stripe disease. Physiological and molecular plant pathology, 61, 3-13.
Randoux et al. (2006) Inhibition of Blumeria graminis f. sp. Tritici germination and partial enhancement of wheat defenses by Milsana. Biochemistry and Cell biology, 96, 1278-1286.
Sharathchandra et al. (2004) A chitosan formulation Elexa™ induced downy mildew disease résistance and growth promotion in pearl millet. Crop protection, 23:881-888.
Tosun et al. (2003) The effect of HarpinEa as plant activator in control of bacterial and fungal diseases of tomato. Congrès Acta horticulturae. 2003 , no 616, pp. 251-254
Varnier et al. (2009) Bacterial rhamnolipids are novel MAMPs conferring résistance to Botrytis cinerea in grapevine. Plant, cell and Environment, 32,178-193.

## Revendications

1. Utilisation d'un extrait de marc de raisin pour stimuler les défenses naturelles de plantes.

2. Utilisation selon la revendication 1, **caractérisée par le fait que** l'extrait comprend plus de 45% en poids de polyphénols par rapport au poids sec de l'extrait.

3. Utilisation selon la revendication 2, **caractérisée par le fait que** l'extrait comprend plus de 70% en poids de polyphénols par rapport au poids sec de l'extrait.

4. Utilisation selon l'une quelconque des revendications 1-3, **caractérisée par le fait que** l'extrait comprend plus de 0,5% en poids d'anthocyanes par rapport au poids sec de l'extrait.

5. Utilisation selon la revendication 4, **caractérisée par le fait que** l'extrait comprend plus de 8% en poids d'anthocyanes par rapport au poids sec de l'extrait.

6. Utilisation selon la revendication 1, selon laquelle l'extrait est un extrait hydroalcoolique de marc de raisin ou un extrait obtenu par extraction à l'eau sulfitée.

7. Utilisation selon l'une quelconque des revendications 1 à 6, **caractérisée par le fait que** les plantes sont choisies dans le groupe comprenant les plantes agronomiquement utiles et les plantes ornementales, aromatiques et médicinales.

8. Procédé pour stimuler les défenses naturelles des plantes, qui comprend l'application d'une composition comprenant un extrait de marc de raisin sur lesdites plantes.

9. Procédé selon la revendication 8, **caractérisé par le fait que** la composition est une composition aqueuse qui est appliquée par pulvérisation foliaire ou infiltration.

10. Procédé selon la revendication 8 ou 9, **caractérisé par le fait que** l'extrait comprend plus de 45% en poids de polyphénols par rapport au poids sec de l'extrait.

11. Procédé selon l'une quelconque des revendications 8 à 10, **caractérisé par le fait que** l'extrait comprend plus de 70% en poids de polyphénols par rapport au poids sec de l'extrait.

12. Procédé selon l'une quelconque des revendication 8 à 11, **caractérisé par le fait que** l'extrait comprend plus de 0,5% en poids d'anthocyanes par rapport au poids sec de l'extrait.

13. Procédé selon l'une quelconque des revendications 8 à 12, **caractérisé par le fait que** l'extrait comprend plus de 8% en poids d'anthocyanes par rapport au poids sec de l'extrait.

14. Procédé selon l'une quelconque des revendications 9 à 13, dans laquelle la composition aqueuse est appliquée par infiltration à moins de 0,30% (p/v) d'extrait de marc de raisin.

15. Procédé selon la revendication 14, dans laquelle la quantité d'extrait de marc de raisin est de 0,05% à 0,30% (p/v).

## Patentansprüche

1. Verwendung eines Extrakts aus Traubentrester zur Stimulation der natürlichen Abwehrkräfte von Pflanzen.

2. Verwendung gemäß Anspruch 1, **dadurch gekennzeichnet, dass** das Extrakt mehr als 45 Gew.-% Polyphenole in Bezug auf das Trockengewicht des Extrakts umfasst.

3. Verwendung gemäß Anspruch 2, **dadurch gekennzeichnet, dass** das Extrakt mehr als 70 Gew.-% Polyphenole in Bezug auf das Trockengewicht des Extrakts umfasst.

4. Verwendung gemäß einem der Ansprüche 1-3, **dadurch gekennzeichnet, dass** das Extrakt mehr als 0,5 Gew.-% Anthocyane in Bezug auf das Trockengewicht des Extrakts umfasst.

5. Verwendung gemäß Anspruch 4, **dadurch gekennzeichnet, dass** das Extrakt mehr als 8 Gew.-% Anthocyane in Bezug auf das Trockengewicht des Extrakts umfasst.

6. Verwendung gemäß Anspruch 1, gemäß der das Extrakt ein wässrig-alkoholisches Extrakt aus Traubentrester oder ein durch Extraktion mit sulfitiertem Wasser erhaltenes Extrakt ist.

7. Verwendung gemäß einem der Ansprüche 1 bis 6, **dadurch gekennzeichnet, dass** die Pflanzen aus der Gruppe ausgewählt sind, umfassend Agrarnutzpflanzen und Zier-, Aroma- und Heilpflanzen.

8. Verfahren zur Stimulation der natürlichen Abwehrkräfte von Pflanzen, das die Anwendung einer Zusammensetzung, die ein Extrakt aus Traubentrester umfasst, auf die Pflanzen umfasst.

9. Verfahren gemäß Anspruch 8, **dadurch gekennzeichnet, dass** die Zusammensetzung eine wässrige Zusammensetzung ist, die durch Aufsprühen auf Blätter oder Einsickern angewendet wird.

10. Verfahren gemäß Anspruch 8 oder 9, **dadurch gekennzeichnet, dass** das Extrakt mehr als 45 Gew.-% Polyphenole in Bezug auf das Trockengewicht des Extrakts umfasst.

11. Verfahren gemäß einem der Ansprüche 8 bis 10, **dadurch gekennzeichnet, dass** das Extrakt mehr als 70 Gew.-% Polyphenole in Bezug auf das Trockengewicht des Extrakts umfasst.

12. Verfahren gemäß einem der Ansprüche 8 bis 11, **dadurch gekennzeichnet, dass** das Extrakt mehr als 0,5 Gew.-% Anthocyane in Bezug auf das Trockengewicht des Extrakts umfasst.

13. Verfahren gemäß einem der Ansprüche 8 bis 12, **dadurch gekennzeichnet, dass** das Extrakt mehr als 8 Gew.-% Anthocyane in Bezug auf das Trockengewicht des Extrakts umfasst.

14. Verfahren gemäß einem der Ansprüche 9 bis 13, in dem die wässrige Zusammensetzung durch Einsickern von weniger als 0,30 % (Gew./Vol.) des Extrakts aus Traubentrester angewendet wird.

15. Verfahren gemäß Anspruch 14, in dem die die Menge des Extrakts aus Traubentrester von 0,05% bis 0,30% (Gew./Vol.) beträgt.

## Claims

1. The use of a grape marc extract in order to stimulate the natural defenses of plants.

2. The use as claimed in claim 1, **characterized in that** the extract includes more than 45% polyphenols by weight in relation to the dry weight of the extract.

3. The use as claimed in claim 2, **characterized in that** the extract includes more than 70% polyphenols by weight in relation to the dry weight of the extract.

4. The use as claimed in any one of claims 1 to 3, **characterized in that** the extract includes more than 0.5% anthocyanins by weight in relation to the dry weight of the extract.

5. The use as claimed in claim 4, **characterized in that** the extract includes more than 8% anthocyanins by weight in relation to the dry weight of the extract.

6. The use as claimed in claim 1, according to which the extract is an aqueous/alcoholic extract of grape marc or an extract obtained by extraction with sulfited water.

7. The use as claimed in any one of claims 1 to 6, **characterized in that** the plants are selected from the group comprising agronomically useful plants and ornamental, aromatic and medicinal plants.

8. A method for stimulating the natural defenses of plants, which includes the application on said plants of a composition comprising a grape marc extract.

9. The method as claimed in claim 8, **characterized in that** the composition is an aqueous composition that is applied by foliar spraying or by infiltration.

10. The method as claimed in claim 8 or claim 9, **characterized in that** the extract includes more than 45% polyphenols by weight in relation to the dry weight of the extract.

11. The method as claimed in any one of claims 8 to 10, **characterized in that** the extract includes more than 70% polyphenols by weight in relation to the dry weight of the extract.

12. The method as claimed in any one of claims 8 to 11, **characterized in that** the extract includes more than 0.5% anthocyanins by weight in relation to the dry weight of the extract.

13. The method as claimed in any one of claims 8 to 12, **characterized in that** the extract includes more than 8% anthocyanins by weight in relation to the dry weight of the extract.

14. The method as claimed in any one of claims 9 to 13, wherein the aqueous composition is applied by the infiltration at less than 0.30% (w/v) of grape marc extract.

15. The method as claimed in claim 14, wherein the quantity of grape marc extract is from 0.05% to 0.30% (w/v).
